# EUROPÄISCHE PATENTSCHRIFT

(11) **EP 1 786 355 B1**
(45) Veröffentlichungstag und Bekanntmachung des Hinweises auf die Patenterteilung: **16.11.2011**
(21) Anmeldenummer: 05760832.5
(22) Anmeldetag: 18.07.2005
(51) Int. Cl.: A61C 13/30

(54) **ZAHNKRONENAUFBAUSYSTEM**
DENTAL CROWN SUPERSTRUCTURE SYSTEM
SYSTEME DE MONTAGE DE COURONNE DENTAIRE

(30) Priorität: 19.07.2004 DE 102004034800; 17.09.2004 DE 202004014491 U
(43) Veröffentlichungstag der Anmeldung: 23.05.2007
(73) Patentinhaber: Harlass, Benjamin Leopold, 37574 Einbeck (DE)
(72) Erfinder: HARLASS, Harald E., 31084 Freden/Leine (DE)
(74) Vertreter: Preuss, Udo
(86) Internationale Anmeldenummer: PCT/EP2005/007807
(87) Internationale Veröffentlichungsnummer: WO 2006/008121

(56) Entgegenhaltungen:
- EP-A- 0 245 878
- WO-A-03/045270
- DE-B- 1 191 073
- DE-C- 844 341
- FR-A- 1 058 354
- US-A- 5 118 294
- US-A1- 2003 113 691

## Beschreibung

Die vorliegende Erfindung befasst sich mit einem Zahnkronenaufbausystem mit einem Aufbaukörper auf einem Zahnstumpf/Zahnwurzel und einem darin einzufügenden Haltestift.

Die bislang bekannten Systeme zum Aufbau einer Zahnkrone besitzen alle die Gemeinsamkeit, dass nach einer Vorbereitung einschließlich einer Glättung des Zahnstumpfes eine Schraube, ein Stift oder dergleichen im endodontisch aufbereiteten Wurzelkanal fixiert und anschließend an dieser Schrauben oder diesem Stift die Zahnkrone fixiert wird. Hierzu ist es zunächst notwendig, den Wurzelkanal abschließend zu behandeln, was in der Regel bei einem infizierten Wurzelkanal an drei zeitlich aufeinanderfolgenden Terminen geschieht, zu welchen der Wurzelkanal gespült, mechanisch gereinigt und medikamentös versorgt werden kann. Bei einem frakturierten Zahn ist daher zunächst ein nur schwer fest verankerbares Provisorium notwendig, um den Wurzelkanal zugänglich zu halten. Darüber hinaus ist die Verankerung einer Krone im Wurzelkanal wegen der kleinen Anlageflächen aus Festigkeitsgründen nicht optimal, da die Schraube bzw. der Stift eine hohe Belastung auf den Wurzelkanalrand ausübt.

In der US 2003/0113691 A1 ist lediglich eine in den Zahnstumpf einzuschraubende Stiftanordnung mit einem überkronbaren Aufbau offenbart. Diese Anordnung ist nur als schmaler, dem Wurzelkanal folgender Stift anzusehen, der einen Kopfbereich hat, der rein zur Halterung eines Kronenteils dient, aber keine Abstützung im Zahnstumpf ermöglicht.

Die EP 0 245 878 A2 offenbart ein gewöhnliches Stiftsystem. Der einzige Unterschied zu bereits bekannten Stiftaufbauten besteht darin, dass die einzelnen endodontischen Sitzungen unter einem sogenannten Kofferdammgummi abgearbeitet werden können .Zu diesem Zweck sind zwei Hilfsteile vorhanden: ein Fingerhut (thimble) und ein Halteteil (support portion). Die Kombination beider Teile erlaubt die Fixierung des Kofferdammgummis. Es erlaubt jedoch nicht die temporäre oder permanente Befestigung einer Krone, eines Teleskops oder die Modellierung einer Kompositekrone vor Ablauf der gesamten endodontischen Behandlungstermine, sondern erst nach der Einzementierung des Stifts. Der Fingerhut und das Halteteil fallen somit weder einzeln noch in ihrer Kombination unter den Begriff Aufbaukörper im Sinne der vorliegenden Anmeldung. Auch die spätere Verbindung von Fingerhut, Halteteil und Stift ändert nichts daran, dass ausschließlich der Stift für den Halt sorgt - also ist es ein Stiftsystem ähnlich den bekannten Varianten.

In der FR 1 058 354 ist eine Schraubkonstruktion gezeigt, deren Kopfteil offensichtlich nicht zur Bearbeitung durch einen Zahnarzt vorgesehen ist. Es ist zudem auch kein Stift zur Verankerung des Fixierungsmittels vorgesehen, da das Fixierungsmittel selbst eingeschraubt wird. Damit betrifft diese Druckschrift keinen gattungsgemäßen Aufbaukörper.

Die DE 11 91 073 A zeigt einen Wurzelstift und keinen Aufbaukörper. Auch die DE 844 341 zeigt einen Wurzelstift, der einen äußerst feinen Kanal aufweist, der lediglich dazu dienen soll, einen Bohrer, der angebrochene, in der Zahnwurzel steckende Teile herausbohren soll, zu führen. Überdies wird auch hier trotz Stiftverstärkungen keine Kippmeiderfunktion erfüllt. Es fehlt nämlich hierfür an der entsprechenden notwendigen Abstützung auf der Dentinstirnfläche der Wurzel. Auch dieser bekannte Wurzelstift ereicht den Apex nicht und ist somit im Übrigen auch nicht geeignet und auch nicht dafür bestimmt, einen endodontisch unbehandelten Wurzelkanal mit dem gewünschten Halt zu versorgen.

Schließlich zeigt die WO 03/045270 A1 wiederum nur einen Stift mit einem feinen Kanal, der zum Führen eines Instruments dienen soll.

Die Aufgabe der vorliegenden Erfindung besteht darin, ein Zahnkronenaufbausystem bereitzustellen, das kostengünstig aufgebaut ist und zudem eine endodontische Behandlung auch bei bereits eingesetztem Aufbaukörper ermöglicht.

Erfindungsgemäß wird die Aufgabe durch ein Zahnkronenaufbausystem mit den Merkmalen des Anspruchs 1 gelöst.

Die erfindungsgemäße Lösung bietet zwei Vorteile. Zunächst ermöglicht der im Vergleich zum Wurzelkanal mit einem sehr viel größeren Durchmesser versehene Endbereich eine großflächige Verankerung des Aufbaukörpers in einer entsprechend im Zahnstumpf eingebrachten Bohrung, und zum anderen gewährt die Durchgangsbohrung in dem Aufbaukörper auch nach dessen Verankerung am Zahnstumpf einen Zugang zum Wurzelkanal, so dass dieser trotz bereits begonnenem Zahnkronenaufbau noch in nachfolgenden Sitzungen endodontisch behandelt werden kann. Die Befestigung des Aufbaukörpers in der Bohrung im Dentin des Zahnstumpfes kann in an sich bekannter Weise durch Verkleben oder Zementieren erfolgen.

Bei einwurzeligen Zähnen kann eine einfache Durchgangsbohrung sich bereits mit der Wurzelkanalöffnung decken, so dass der Wurzelkanal ohne weiteres zugänglich bleibt. Eine weitere Ausführungsform der Erfindung sieht vor, dass die Bohrung zur Stirnfläche des Endbereiches hier erweitert ist, vorzugsweise zu einem Langloch oder kegelförmig. Dies erlaubt auch bei seitlich zu der Bohrungsöffnung versetzter Wurzelkanalöffnung oder bei mehrwurzeligen Zähnen einen direkten Zugang zu dem Wurzelkanal. Es ist aber auch für einen Zahnarzt ohne weiteres mit Hilfe des im zur Verfügung stehenden Werkzeugs möglich, die Bohrung zur Stirnfläche hin in der benötigten Art und Weise zu erweitern.

In einer besonders bevorzugten Ausführungsform bei einwurzligen Zähnen liegt die Durchgangsbohrung zentrisch in dem rotationssymmetrischen Endbereich. Auf diese Weise ist es für einen Zahnarzt leicht möglich, mit Hilfe eines in der Regel in seinem Fundus vorhandenen selbstzentrierenden Bohrers/Fräsers, z. B. eines Zapfensenkers, die zylinderförmige Vertiefung in dem gewünschten Durchmesser zu schaffen, wobei der Wurzelkanal des Zahnes zur Zentrierung der Bohrung genutzt werden kann und sich entsprechend beim nachfolgenden Einsetzen des Aufbaukörper die Durchgangsbohrung automatisch in Flucht mit dem Wurzelkanalaustritt befindet. Bei mehrwurzligen Zähnen erfolgt die Bohrung/Fräsung im Zentrum der Stirnfläche des Zahnes nach Augenmaß, wobei vorzugsweise der bereits erwähnte Aufbaukörper mit erweiterter Bohrung zum Einsatz kommt.

Die Ausgestaltung der Erfindung sieht vor, daß der Aufbaukörper einen sich an den Endbereich anschließende erweiterten Bereich aufweist. Während insbesondere bei der Behandlung von Schneidezähnen im Dentin des Zahnstumpfes auch aus Festigkeitsgründen Bohrungen in einem bestimmten Mindestabstand zur Außenfläche angeordnet sein sollten, um die Festigkeit des Zahnstumpfes nicht zu gefährden, kann es sinnvoll sein, den in die Mundhöhle ragenden erweiterten Bereich mit größerem Querschnitt auszuführen, um weniger Material bei der Verwendung zahnfarbener Komposite beim Aufbau einer beispielsweise zahnfarbenen Zahnkrone einsetzen zu müssen. Die Querschnittserweiterung zwischen dem Endbereich und dem erweiterten Bereich ist dabei vorzugsweise als Absatz mit einer senkrecht zur Mittelachse des Aufbaukörpers liegenden Fläche ausgestaltet, da diese Fläche, die an einer planen Oberfläche des Zahnstumpfes anliegt, die Festigkeit der Verankerung des Aufbaukörpers am Zahnstumpf weiter verbessert. Der in die Mundhöhle ragende erweiterte Bereich kann einen zylindrischen Querschnitt besitzen, der vorzugsweise konzentrisch zum Endbereich ausgebildet ist. Eine solche Ausbildung bietet den Vorteil, daß der Aufbaukörper in jeder beliebigen Winkellage eingesetzt werden kann. Darüber hinaus bietet die rotationssymmetrische Ausbildung des gesamten Aufbaukörpers Vorteile bei dessen Herstellung. Es ist aber auch denkbar, andere Querschnittsformen für den erweiterten Bereich zu wählen, beispielsweise elliptische Formen oder auch Querschnitte, die bereits in einer bestimmten Weise zur Verbindung mit vorgefertigten Elementen, beispielsweise einer Frasacostrip-Krone mit entsprechenden Befestigungsmitteln, ausgebildet sind.

Der Durchmesser der Durchgangsbohrung besitzt bei einwurzligen Zähnen einen Durchmesser von vorzugsweise ungefähr 1 mm, was im wesentlichen den Wurzelkanaldurchmesser eines menschlichen Zahnes entspricht. Hiervon sind jedoch Abweichungen möglich, wenn beispielsweise im veterinärmedizinischen Bereich der Aufbaukörper bei einem Tier mit anderen Zahndimensionen eingesetzt werden soll, dessen Wurzelkanäle andere Durchmesser aufweisen. Beschränkt werden die Abmessungen der Innenbohrung zum einen durch die bei zu groß gewähltem Durchmesser abnehmende Festigkeit des Aufbaukörpers und andererseits bei Verengung durch die Behinderung der Zugänglichkeit des Wurzelkanals bei Verengung.

Der Endbereich besitzt vorzugsweise, wie bereits angedeutet, eine zylindrische Form. Diese ermöglicht das Verwenden einfacher, in der Regel bei jedem Zahnarzt vorhandener Bohr-/Fräswerkzeuge. Es ist aber auch denkbar, den Endbereich kegelstumpfförmig auszubilden, was u. U. zur Verbesserung der Festigkeit der Verankerung sinnvoll sein kann. In der Regel genügt aber eine zylindrische Klebe- bzw. Zementierfläche.

Der zuvor beschriebene Aufbaukörper muß nicht notwendigerweise einstückig ausgebildet sein, sondern kann auch aus zwei einzelnen Zylinderkörpern mit Innenbohrungen bestehen, wobei zunächst ein Teil im oder am Zahnstumpf angebracht wird und anschließend das zweite Teil in geeigneter Weise verklebt oder eingesteckt wird.

Bezüglich der Materialien kann der Aufbaukörper aus den an sich bereits im Dentalbereich bekannten Materialien bestehen, deren Festigkeitseigenschaften denen von Dentin entsprechen oder wenigstens ähnlich sind. Im Hinblick auf die Ausbildung der Zahnkrone sollte das Material vorzugsweise auch gut abrasiv formbar und/oder zum Auftrag von Kompositmaterialien geeignet sein.

Geeignete Materialien für den Aufbaukörper können Thermoplaste oder Duromere sein, wie sie in den beigefügten Ansprüchen explizit aufgeführt sind. Bei der Verwendung eines Thermoplastes bietet sich die Herstellung des Aufbaukörpers in einem kostengünstigen Spritzgußverfahren an, während bei Duromeren in einem üblichen Aushärtungsverfahren der Kunststoff aus den Monomeren in einer geeigneten Form aushärtet.

Nachfolgend wird anhand der beigefügten Zeichnungen näher auf ein Ausführungsbeispiel der Erfindung eingegangen. Es zeigen:
- Fig. 1: einen Längsschnitt eines frakturierten Zahnes;
- Fig. 2: den Zahn aus Fig. 1 nach einem Planen;
- Fig. 3a, b: einen Längsschnitt des Zahnes nach Einbringen einer Bohrung und eine Stirnansicht;
- Fig. 4a, b: einen Querschnitt des Zahnes mit befestigtem Aufbaukörper und eine Stirnansicht;
- Fig. 5: einen Längsschnitt des Zahnes mit bearbeitetem Aufbaukörper;
- Fig. 6: einen Längsschnitt des Zahnes mit fertiggestellter Krone;
- Fig. 7a, b: schematische Darstellungen von Bohrwerkzeugen;
- Fig. 8a, b: teilgeschnittene Seitenansichten von zwei Ausführungsformen von Aufbaukörpern;
- Fig. 9: eine Ansicht eines Stiftes zum Einsetzen in die Bohrung des Aufbaukörpers.

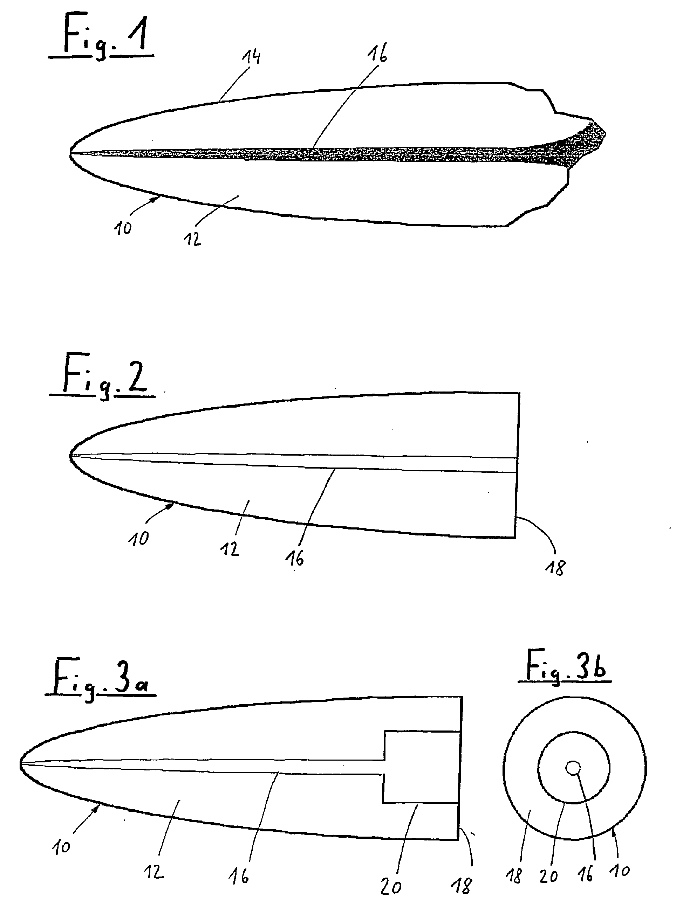

In Fig. 1 ist ein Längsschnitt eines Zahnes gezeigt, der beispielsweise infolge eines Unfalles stark frakturiert ist. Wie bekannt ist, besteht der Zahn aus einer Hauptmasse Dentin 12 und einer äußeren Schicht Zahnzement 14, während in seinem Innenbereich ein Wurzelkanal 16 eine Verbindung zum Nerv des Zahnes herstellt.

Zum Aufbauen einer neuen Zahnkrone auf dem frakturierten Zahn wird in einem ersten Bearbeitungsschritt der frakturierte Bereich entfernt und eine plane Wurzeloberfläche 18 geschaffen, die senkrecht zum Verlauf des Wurzelkanals 16 ausgerichtet ist und bei typischen Zahnfrakturen ungefähr auf Zahnfleischniveau liegt.

Anschließend wird mit einem rotierenden, zahnärztlichen Instrument eine zylinderförmige Vertiefung 20 (s. Fig. 2) in das Dentin gebohrt, die konzentrisch zum Wurzelkanal ausgerichtet ist. Die Querschnittsgröße dieser zylinderförmigen Bohrung kann im Querschnitt von dem jeweils zu behandelnden Zahn abhängen, wobei aus Festigkeitsgründen um die Bohrung herum eine Dentinwandstärke von ungefähr 2 mm oder mehr verbleiben sollte.

In der Bohrung 20 kann nunmehr ein industriell vorgefertigter Stufenzylinder 22 eingesetzt werden, beispielsweise durch Verkleben oder Zementieren. Der Stufenzylinder 22 besteht aus einem kleineren, zylindrischen Endbereich 24, dessen Außendurchmesser an den Durchmesser der Bohrung 20 im Dentin angepaßt ist, und einem erweiterten zylindrischen Bereich 26, die durch einen Absatz 27 mit einer vertikal zur Mittellängsachse des Zylinders 22 liegenden Fläche voneinander getrennt sind. Die Radiallänge des Absatzes beträgt ungefähr 2 mm, kann aber ggf. an die Dimensionen eines zu behandelnden Zahnes angepaßt werden, insbesondere dann, wenn eine Dentinwandstärke abweichend von den zuvor erwähnten 2 mm gewählt wird. Insbesondere im veterinärmedizinischen Bereich sind hier erhebliche Abweichungen nach unten oder oben denkbar. Der Stufenzylinder 22 besteht aus einem Material, das in seinen Festigkeitseigenschaften dem Dentin 12 ähnlich ist, so daß einerseits die gewünschten Festigkeitswerte gegeben sind, sich andererseits der Stufenzylinder 22 aber auch mit den üblichen zahnärztlichen Instrumenten formgebend bearbeiten läßt.

Besonders zweckmäßig ist die Ausbildung einer Durchgangsbohrung 28 zentrisch in dem Stufenzylinder 22. Die Durchgangsbohrung 28 liegt entsprechend der konzentrischen Ausbildung der Bohrung 20 bezüglich des Wurzelkanals 16 nach dem Einkleben oder Zementieren des Stufenzylinders 22 in der Bohrung 20 in Flucht zu dem Wurzelkanal 16, so daß dieser durch die Durchgangsbohrung 28 des Stufenzylinders 22 hindurch auch nach dem Anbringen des Aufbaukörpers in der Form des Stufenzylinders 22 zugänglich bleibt. Dies bietet den Vorteil, daß mit dem Aufbau der Zahnkrone auf der Zahnwurzel bereits in der ersten Sitzung begonnen werden kann und die Wurzelkanalbehandlung auch noch in nachfolgenden Behandlungsterminen möglich ist. Die Durchgangsbohrung des Stufenzylinders 22 besitzt einen Durchmesser von beispielsweise 1 mm für menschliche Schneidezähne, wobei auch hier wiederum Anpassungen an die jeweiligen Gegebenheiten vorgenommen werden können.

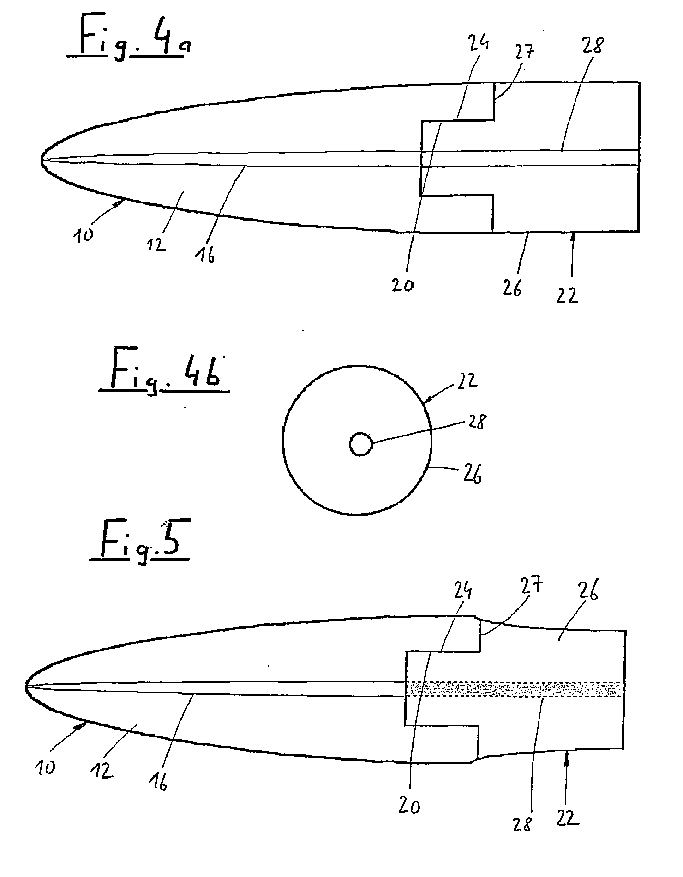

Mit Bezug auf Fig. 5 kann nach dem Aushärten des Klebers oder Zements der erweiterte zylindrische Bereich 26 abrasiv einer Hohlkegelpräparation unterzogen werden, die in der Regel bis in den Bereich des Dentins 12 erfolgt, um beispielsweise temporär eine vorgefertigte Frasacostrip-Krone einsetzen zu können. Ein genommener Abdruck kann im Dentallabor zur Anfertigung der Krone dienen.

Alternativ besteht jedoch auch die Möglichkeit, nach dem Beschleifen des erweiterten Bereiches 26 des Stufenzylinders 22 den entstandenen Stumpf mit dem Aufbaukörper 22 sofort mittels zahnfarbener Komposite zu einer zahnfarbenen Zahnkrone zu ergänzen. Der Patient erhält damit unmittelbar eine behandlergefertigte neue Zahnkrone. Wird, je nach Zustand des Wurzelkanals, im gleichen Termin eine Entnahme des nicht erkrankten, quasi gesunden Nerves und Pulpengewebes aufgrund der durch die Fraktur erfolgten Freilegung vorgenommen, kann nach Ablauf der üblichen Wurzelbehandlung in mehreren Terminen eine Wurzelfüllung eingebracht werden. Somit kann je nach Zustand des Zahnes die aufgrund seiner klinischen Situation richtige Behandlung vorgenommen werden, da die in dem Aufbaukörper 22 vorgesehene Durchgangsbohrung 28 die Möglichkeit offenläßt, sogar nachträglich noch eine neue Bohrung in eine ausgehärtete Wurzelfüllungsmasse einzubringen und auch zur zusätzlichen Stabilisierung noch einen Haltestift in den Übergangsbereich zwischen Dentin und Stufenzylinder 22 einzukleben.

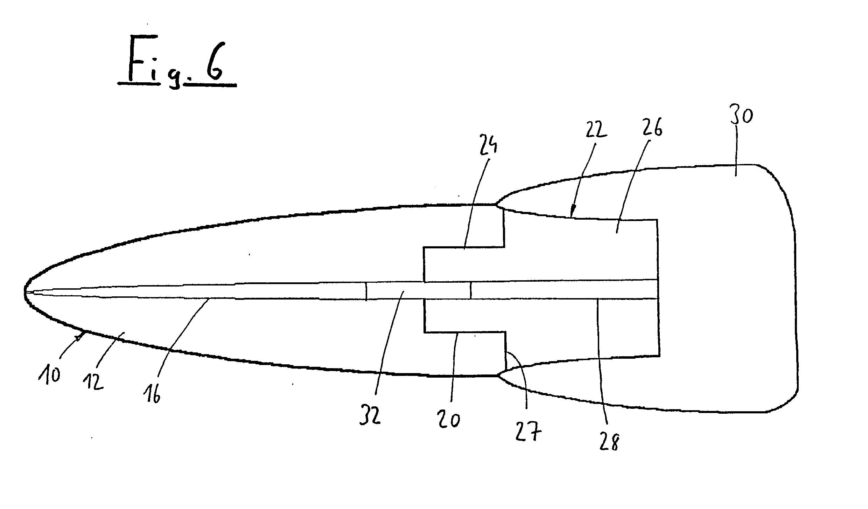

Fig. 6 zeigt den wiederhergestellten Zahn 10 mit der auf dem Aufbaukörper 22 sitzenden Zahnkrone 30 und dem in die Bohrung und den Wurzelkanal 16 eingeklebten zusätzlichen Stift 32.

Der leicht als Serienteil in großen Stückzahlen herstellbare Stufenzylinder 22 erlaubt es, den Aufbau einer Zahnkrone in sehr rationeller Weise, mit vergleichsweise einfachen, wiederkehrenden Arbeitsschritten vorzunehmen, so daß eine Kostenersparnis nicht nur durch den einfachen Aufbaukörper, sondern auch durch das rationalisierte Wiederherstellungsverfahren beim Zahnarzt zu erwarten ist. Aufgrund der Durchgangsbohrung 28, die ggf. zur Stirnfläche des Endbereichs erweitert sein kann, z. B. zu einem Langloch oder kegelförmig, ist der Aufbaukörper 22 zudem flexibel unabhängig vom Zustand des Wurzelkanals 16 eines frakturierten oder u. U. auch von Karies befallenen Zahnes möglich.

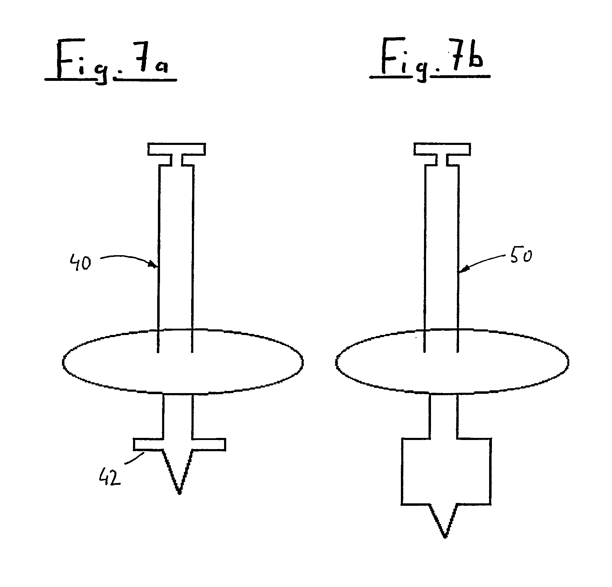

Als geeignete Werkzeuge für die Herstellung der Zapfenbohrung im vorbereiteten Zahnstumpf können die in Fig. 7a und b gezeigten Bohrer eingesetzt werden. Der in Fig. 7a gezeigte Bohrer 40 besitzt eine Flügelform, wobei der Außendurchmesser der Flügel 42 dem Durchmesser der in dem Zahnstumpf einzubringenden Bohrung entspricht. Möglich ist auch eine sog. Tonnenform, wie sie durch den in Fig. 7b gezeigten Bohrer 50 realisiert ist.

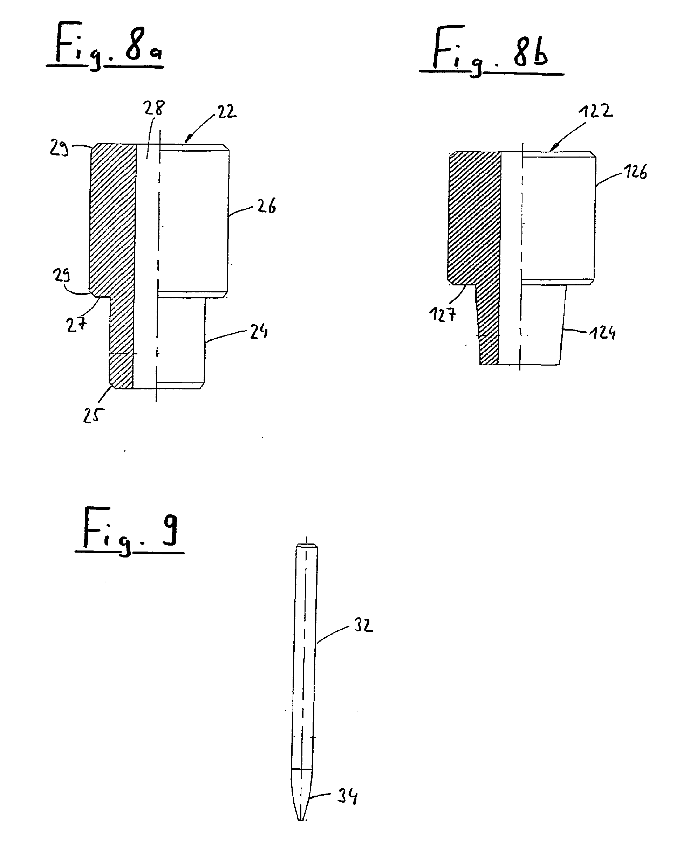

In Fig. 8a ist eine teilgeschnittene Ansicht eines Aufbaukörpers 22 im Ausgangszustand gezeigt. Gut erkennbar ist der Stufenzylinder 22 mit seinem kleineren zylindrischen Endbereich 24, dem erweiterten zylindrischen Bereich 26 und dem zwischenliegenden Absatz 27. Erkennbar sind auch eine erste Fase 25 am Stirnende des kleineren Endbereiches 24, die das Einsetzen des Aufbaukörpers in die Bohrung 20 im Dentin erleichtert, und zweite und dritte Fasen 29 an den Flanken des größeren zylindrischen Bereiches 26, die der Vermeidung scharfer Kanten dienen.

Bei dem gezeigten Beispiel beträgt der Außendurchmesser des größeren zylindrischen Bereiches 26 ungefähr 44 mm, während der kleinere zylindrische Bereich 24 einen Durchmesser von 30 mm besitzt. Die Innenbohrung 28 besitzt einen Durchmesser von 15 mm. Sämtliche vorgenannten Werte sind selbstverständlich nur beispielhaft zu verstehen und können dem jeweiligen Einsatzzweck angepaßt sein.

In Fig. 8b ist eine weitere Ausführungsform eines Aufbaukörpers in der Form eines Stufenzylinders 122 gezeigt, bei welchem ein Endbereich 124 konisch ausgeführt ist, d. h. der Endbereich verjüngt sich zu seinem Stirnende hin. Wiederum schließt sich an diesen Endbereich 124 ein Absatz 127 an, der den Übergang zu einem erweiterten zylindrischen Bereich 126 bildet. Der konische Endbereich 124 kann bei entsprechender Ausführung der Bohrung im Dentin das Einfügen erleichtern und sorgt für einen verbesserten Sitz unmittelbar nach dem Einfügen.

In Fig. 9 ist schließlich noch ein Stift 32 gezeigt, wie er auch in Fig. 6 gezeigt ist. Ein solcher Stift besitzt einen geringfügig kleineren Außendurchmesser als die Bohrungen 28 der Aufbaukörper, so daß er mit leichtem Spiel in diese einsteckbar ist. Der Stift 32 besitzt ein spitz zulaufendes Ende 34, mit welchem der Stift 32 beim Einfügen in den Wurzelkanal 16 eindringen kann. Der Stift 32 wird zur besseren Verankerung des Aufbaukörpers an dem Zahn 10 eingesetzt, wobei die Verbindung zu dem Aufbaukörper und/oder dem Wurzelkanal mit Hilfe von üblichen Klebematerialien erfolgt.

## Patentansprüche

1. Zahnkronenaufbausystem zur Benützung auf einem Zahnstumpf (10), mit:
einem Aufbaukörper (22),
- der aus einem abrasiv formbaren Material besteht,
- der einen rotationssymmetrischen Endbereich (24) besitzt, dessen Durchmesser wesentlich größer als der Durchmesser des Wurzelkanals (16) ist und in einer entsprechenden Bohrung (20) im Zahnstumpf (10) verankerbar ist,
- der einen sich an den Endbereich (24) anschließenden erweiterten Bereich (26) aufweist, der zum in die Mundhöhle ragen und zum Halten einer Zahnkrone ausgebildet ist,
- in dem eine Durchgangsbohrung (28) vorhanden ist, deren in einer Stirnfläche des Endbereiches (24) liegende Austrittsöffnung so angeordnet ist, dass sie nach dem Einsetzen des Aufbaukörpers (22) in die im Zahnstumpf (10) vorhandene Bohrung (20) einen Zugang zur Öffnung des Wurzelkanals (16) ermöglicht, um eine endodontische Behandlung durchführen zu können,
einen separaten zusätzlichen Haltestift (32),
d er dazu ausgebildet ist, in die Durchgangsbohrung (28) in dem Aufbaukörper (22) und den Wurzelkanal (16) eingeklebt zu werden.

2. Zahnkronenaufbausystem nach Anspruch 1, **dadurch gekennzeichnet, dass** die Durchgangsbohrung (28) zu der Stirnfläche des Endbereichs (24) hin erweitert ist, z. B. zu einem Langloch oder kegelförmig.

3. Zahnkronenaufbausystem nach Anspruch 1 oder 2, **dadurch gekennzeichnet, dass** die Durchgangsbohrung (28) zentrisch zu dem rotationssymmetrischen Endbereich (24) angeordnet ist.

4. Zahnkronenaufbausystem nach einem der Ansprüche 1-3, **dadurch gekennzeichnet, dass** der erweiterte Bereich (26) zylindrisch und konzentrisch zum Endbereich (24) ausgebildet ist.

5. Zahnkronenaufbausystem nach einem der Anspruche 1-4, **dadurch gekannzeichnet, daß** zwischen dem Endbereich (24) und dem erweiterten Bereich (26) ein Absatz (27) mit einer planen Fläche senkrecht zur Mittelachse des Aufbaukörpers (22) vorgesehen ist.

6. Zahnkronenaufbausystem nach einem der vorhergehenden Ansprüche, **dadurch gekennzeichnet, daß** der Endbereich (24) zylindrisch ausgebildet ist.

7. Zahnkronenaufbausystem nach einem der Ansprüche 1 bis 6, **dadurch gekennzeichnet, daß** der Endbereich kegelstumpfförmig ausgebildet ist.

8. Zahnkronenaufbausystem nach einem der vorhergehenden Ansprüche, **dadurch gekennzeichnet, daß** er aus einem Material besteht, dessen Festigkeitseigenschaften denen von Dentin entsprechen oder wenigstens ähnlich sind.

9. Zahnkronenaufbausystem nach einem der vorhergehenden Ansprüche, **dadurch gekennzeichnet, daß** er aus einem Material besteht, das zum Auftrag von Kompositmaterialien geeignet ist.

10. Zahnkronenaufbausystem nach einem der vorhergehenden Ansprüche, **dadurch gekennzeichnet, daß** er aus einem Material besteht, welches zum Verbleib unter einem prothetischen Versorgungskörper (z. B. Krone oder Teleskop) geeignet ist.

11. Zahnkronenaufbausystem nach einem der vorhergehenden Ansprüche, **dadurch gekennzeichnet, daß** er aus einem Material besteht, das ein Thermoplast oder ein Duromer ist.

12. Zahnkronenaufbausystem nach Anspruch 11, **dadurch gekennzeichnet, daß** der Thermoplast ein Polyamid bestehend aus einem Kondensationsprodukt einer zweiwertigen Alkansäure und einem zweiwertigen Alkanamin wie z. B. Poly-Hexamethylendiaminadipat ist.

13. Zahnkronenaufbausystem nach Anspruch 11, **dadurch gekennzeichnet, daß** der Thermoplast ein Polyester bestehend aus einem Kondensationsprodukt einer zweiwertigen organischen Säure und einer zweiwertigen organischen Hydroxyverbindung wie Poly-Ethylenglykolterephtalat oder Poly-Ethylenglykol-Naphtalindicarbonsäure-Ester ist.

14. Zahnkronenaufbausystem nach spruch 11, **dadurch gekennzeichnet, daß** der Thermoplast ein Copolymerer aus Polyester und Polyamid ist.

15. Zahnkronenaufbausystem nach Anspruch 11, **dadurch gekennzeichnet, daß** der Thermoplast ein Polycarbonat bestehend aus einem Kondensationsprodukt der Kohlensäure und einer zweiwertigen organischen Hydroxyverbindung ist.

16. Zahnkronenaufbausystem nach Anspruch 11, **dadurch gekennzeichnet, daß** der Thermoplast ein Polyether, wie Polymethylenoxyd oder Poly-Ether-Ether-Keton ist.

17. Zahnkronenaufbausystem nach einem der Ansprüche 11 bis 16, **dadurch gekennzeichnete daß** es im Spritzgießverfahren hergestellt ist.

18. Zahnkronenaufbausystem nach Anspruch 11, **dadurch gekennzeichnet, daß** das Duromer ein Epoxydharz wie ein Trigylcerid von Bisphenol-A oder ein Polyacrylat bestehend aus mindestens drei Acryleste enthaltende Acrylsäure-Glycerid-Ester oder ein Alkydharz ist.

19. Zahnkronenaufbausystem nach Anspruch 18, **dadurch gekennzeichnete daß** es in einem Aushärtungsverfahren aus den Monomeren hergestellt ist.

20. Zahnkronenaufbausystem nach einem der vorhergehenden Ansprüche, **dadurch gekennzeichnet, daß** er mehrteilig ausgebildet ist und die Teile aneinander festlegbar sind.

21. Zahnkronenaufbausystem nach Anspruch 20, **dadurch gekennzeichnet, daß** ein erster Teil den im Zahnstumpf verankerbare Endbereich (24) umfaßt und ein zweiter Teil am ersten Teil (24) festlegbar ist, so daß er nach der Verbindung aus dem Zahnstumpf (10) herausragt.

## Claims

1. A dental crown superstructure system for use on a tooth stump (10), comprising:
a) a superstructure body (22)
- comprised of an abrasively shapeable material,
- having a rotationally-symmetric end portion (24) whose diameter is substantially greater than the diameter of the root canal (16), and being configured to be fixed in a corresponding bore (20) in the tooth stump (10),
- having an expanded portion (26) connected to the end portion (24), the expanded portion (26) projecting into the oral cavity and being configured to hold a dental crown,
- in which a through-bore (28) is provided, the exit opening of the through-bore being arranged in a front surface of the end portion (24) so that, after the insertion of the superstructure body (22) in the bore (20) provided in the tooth stump (10), it allows access to the opening of the root canal (16) for performing an endodontic treatment,
b) a separate additional retaining post (32)
- configured to be adhered in the through-bore (28) in the superstructure body (22) and the root canal (16).

2. The dental crown superstructure system according to claim 1, **characterized in that** the through-bore (28) is expanded towards the front surface of the end portion (24), e.g. to an elongated hole or conical.

3. The dental crown superstructure system according to claim 1 or 2, **characterized in that** the through-bore (28) is arranged centrally to the rotationally-symmetric end portion (24).

4. The dental crown superstructure system according to one of the claims 1-3, **characterized in that** the expanded region (26) is shaped cylindrically and concentrically to the rotationally-symmetric end portion (24).

5. The dental crown superstructure system according to one of the claims 1-4, **characterized in that** a shoulder (27) having a plan surface normal to the centreline of the superstructure body (22) is provided between the end portion (24) and the expanded portion (26).

6. The dental crown superstructure system according to one of the preceding claims, **characterized in that** the end portion (24) is formed cylindrical.

7. The dental crown superstructure system according to one of the claims 1 to 6, **characterized in that** the end portion has a frustum shape.

8. The dental crown superstructure system according to one of the preceding claims, **characterized in that** the end portion is made of a material whose strength properties correspond to those of dentin or are at least similar thereto.

9. The dental crown superstructure system according to one of the preceding claims, **characterized in that** it is made of a material that is appropriate for the application of composite materials.

10. The dental crown superstructure system according to one of the preceding claims, **characterized in that** it is made of a material that is appropriate for remaining underneath a prosthetic provisional body (e.g., dental crown or overlay).

11. The dental crown superstructure system according to one of the preceding claims, **characterized in that** it is made of a material that is a thermoplastic or a thermosetting material.

12. The dental crown superstructure system according to claim 11, **characterized in that** the thermoplastic material is a polyamide comprised of a condensation product of a bivalent alkanoic acid and a bivalent alkanamine, such as, e.g., polyhexamethylenediamineadipate.

13. The dental crown superstructure system according to claim 11, **characterized in that** the thermoplastic material is a polyester comprised of a condensation product of a bivalent organic acid and a bivalent organic hydroxy compound such as, e.g., polyethylenegly-colterephtalate or polyethyleneglycol naphthalene carboxylic acid ester.

14. The dental crown superstructure system according to claim 11, **characterized in that** the thermoplastic material is a copolymer of polyester and polyamide.

15. The dental crown superstructure system according to claim 11, **characterized in that** the thermoplastic material is a polycarbonate comprised of a condensation product of carbonic acid and a bivalent organic hydroxyl compound.

16. The dental crown superstructure system according to claim 11, **characterized in that** the thermoplastic material is a polyether such as, e.g., polymethylene oxide or poly-ether-ether-ketone.

17. The dental crown superstructure system according to one of the claims 11 to 16, **characterized in that** it is produced in an injection moulding process.

18. The dental crown superstructure system according to claim 11, **characterized in that** the thermosetting material is an epoxy resin such as, e.g., triglyceride of bisphenol-A, or a polyacrylate comprised of acrylic acid glycerid ester containing at least three acrylic esters, or an alkyd resin.

19. The dental crown superstructure system according to claim 18, **characterized in that** it is produced from the monomers in a curing process.

20. The dental crown superstructure system according to one of the preceding claims, **characterized in that** it is formed in several parts and the parts are affixable to one another.

21. The dental crown superstructure system according to claim 20, **characterized in that** a first part includes the end portion (24) anchorable in the tooth stump and a second part is affixable to the first part (24) so that it protrudes from the tooth stump (10) after the connection.

## Revendications

1. Système de montage de couronne dentaire pour utilisation sur un moignon de dent (10), comprenant :
a) un corps de montage (22),
- qui est constitué d'un matériau façonnable par abrasion,
- qui possède une zone d'extrémité (24) à symétrie de rotation, dont le diamètre est sensiblement plus grand que le diamètre du canal (16) de la racine et qui peut être ancrée dans un orifice correspondant (20) dans le moignon de dent (10),
- qui présente une zone élargie (26) se raccordant à la zone d'extrémité (24), qui est conformée pour dépasser dans la cavité buccale et pour maintenir une couronne dentaire,
- dans lequel il est prévu un orifice de passage (28), dont l'ouverture de sortie située dans une face frontale de la zone d'extrémité est aménagée de sorte qu'il permette, après insertion du corps de montage (22) dans l'orifice (20) prévu dans un moignon de dent, un accès à l'ouverture du canal (16) de la racine, pour pouvoir effectuer un traitement endodontique,
b) une tige de fixation supplémentaire séparée (32),
- qui est conformée de manière à être collée dans le corps de montage (22) et le canal (16) de la racine.

2. Système de montage de couronne dentaire selon la revendication 1, **caractérisé en ce que** l'orifice de passage (28) est élargi vers la surface frontale de la zone d'extrémité (24), par exemple en forme de trou longitudinal ou de cône.

3. Système de montage de couronne dentaire selon la revendication 1 ou 2, **caractérisé en ce que** l'orifice de passage (28) est aménagé centralement par rapport à la zone d'extrémité (24) à symétrie de rotation.

4. Système de montage de couronne dentaire selon l'une quelconque des revendications 1 à 3, **caractérisé en ce que** la zone élargie (26) a une forme cylindrique et concentrique par rapport à la zone d'extrémité (24).

5. Système de montage de couronne dentaire selon l'une quelconque des revendications 1 à 4, **caractérisé en ce qu'**il est prévu entre la zone d'extrémité (24) et la zone élargie (26) un dégagement (27) avec une surface plane perpendiculaire à l'axe central du corps de montage (22).

6. Système de montage de couronne dentaire selon l'une quelconque des revendications précédentes, **caractérisé en ce que** la zone d'extrémité (24) a une forme cylindrique.

7. Système de montage de couronne dentaire selon l'une quelconque des revendications 1 à 6, **caractérisé en ce que** la zone d'extrémité a une forme tronconique.

8. Système de montage de couronne dentaire selon l'une quelconque des revendications précédentes, **caractérisé en ce qu'**il est constitué d'un matériau dont les propriétés de résistance correspondent ou sont au moins similaires à celles de la dentine.

9. Système de montage de couronne dentaire selon l'une quelconque des revendications précédentes, **caractérisé en ce qu'**il est constitué d'un matériau qui convient à l'application de matériaux composites.

10. Système de montage de couronne dentaire selon l'une quelconque des revendications précédentes, **caractérisé en ce qu'**il est constitué d'un matériau qui convient pour rester en dessous d'un corps de soins prothétique (par exemple une couronne ou une couronne télescope).

11. Système de montage de couronne dentaire selon l'une quelconque des revendications précédentes, **caractérisé en ce qu'**il est constitué d'un matériau qui est un thermoplastique ou un duromère.

12. Système de montage de couronne dentaire selon la revendication 11, **caractérisé en ce que** le thermoplastique est un polyamide constitué d'un produit de condensation d'un acide alcanoïque bivalent et d'une alcanolamine bivalente, par exemple du poly(adipate d'hexaméthylènediamine).

13. Système de montage de couronne dentaire selon la revendication 11, **caractérisé en ce que** le thermoplastique est un polymère constitué d'un produit de condensation d'un acide organique bivalent et d'un composé hydroxylé organique bivalent, tel que la poly(téréphtalate d'éthylèneglycol) ou le poly(ester d'acide naphtalènedicarboxylique d'éthylèneglycol).

14. Système de montage de couronne dentaire selon la revendication 11, **caractérisé en ce que** le thermoplastique est un copolymère de polyester et de polyamide.

15. Système de montage de couronne dentaire selon la revendication 11, **caractérisé en ce que** le thermoplastique est un polycarbonate constitué d'un produit de condensation de l'acide carbonique et d'un composé hydroxylé organique bivalent.

16. Système de montage de couronne dentaire selon la revendication 11, **caractérisé en ce que** le thermoplastique est un polyéther tel que le poly(oxyde de méthylène) ou la poly-éther-éthercétone.

17. Système de montage de couronne dentaire selon l'une quelconque des revendications 11 à 16, **caractérisé en ce qu'**il est fabriqué par un procédé de moulage par injection.

18. Système de montage de couronne dentaire selon la revendication 11, **caractérisé en ce que** le duromère est une résine époxy telle qu'un triglycéride de bisphénol-A ou un polyacrylate constitué d'un ester d'acide acrylique et de glycéride contenant au moins trois résidus acryliques ou d'un résine alkyde.

19. Système de montage de couronne dentaire selon la revendication 18, **caractérisé en ce qu'**il est fabriqué à partir des monomères dans un procédé de durcissement.

20. Système de montage de couronne dentaire selon la revendication 19, **caractérisé en ce qu'**il est constitué de plusieurs parties et les parties peuvent être fixées l'une à l'autre.

21. Système de montage de couronne dentaire selon la revendication 20, **caractérisé en ce qu'**une première partie comprend la zone d'extrémité (24) qui peut être ancrée dans le moignon de dent et une seconde partie peut être fixée sur la première partie (24) de sorte qu'elle fasse saillie du moignon de dent (10) après la liaison.
